# EUROPÄISCHE PATENTSCHRIFT

(11) **EP 2 288 483 B1**
(45) Veröffentlichungstag und Bekanntmachung des Hinweises auf die Patenterteilung: **23.04.2014**
(21) Anmeldenummer: 09765235.8
(22) Anmeldetag: 15.06.2009
(51) Int. Cl.: B29B 17/00, C08J 11/06

(54) **VERFAHREN UND ANORDNUNG ZUR VORBEHANDLUNG VON POLYMERMATERIALIEN**
METHOD AND ARRAY FOR PRETREATING POLYMER MATERIALS
PROCÉDÉ ET AGENCEMENT DE PRÉTRAITEMENT DE MATÉRIAUX POLYMÈRES

(30) Priorität: 17.06.2008 AT 9672008
(43) Veröffentlichungstag der Anmeldung: 02.03.2011
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); HACKL, Manfred, A-4040 Linz (AT); WENDELIN, Gerhard, A-4030 Linz (AT)
(74) Vertreter: Wildhack & Jellinek
(86) Internationale Anmeldenummer: PCT/AT2009/000238
(87) Internationale Veröffentlichungsnummer: WO 2009/152541

(56) Entgegenhaltungen:
- WO-A-2004/083289
- WO-A-2008/058303
- DE-A1- 1 679 837
- DE-A1-102005 013 701

## Beschreibung

Die Erfindung betrifft ein Verfahren gemäß dem Oberbegriff des Anspruchs 1 sowie eine Anordnung zur Durchführung des Verfahrens gemäß Anspruch 8.

PCR (Post Consumer Recycled) Flakes aus Polyethylenterephthalat (PET) gewonnen aus gewaschenen PET Flaschen oder aus PET Tiefziehteilen stellen immer mehr eine wichtige Rohstoffquelle und Handelsware für die Produktion von PET Produkten dar. PET Flakes werden in größeren Mengen für die Produktion von PET Flachfolie und PET Flaschen verwendet. Die PET Flachfolie wird meist zu Tiefziehprodukten verarbeitet. Es können bei der Herstellung derartiger Produkte sowohl Mischungen von Neuware und gewaschenen PCR-PET Flakes als auch 100% Flakes eingesetzt werden. Da es Ziel ist, die Endprodukte, wie PET-Flaschen, PET Tiefziehteile auch für den Lebensmitteleinsatz zu nützen, gibt es unterschiedliche Verfahren Flakes oder Schmelze für den Lebensmitteleinsatz tauglich zu machen. Dies gelingt beispielsweise durch Vacurema®-Anlagen.

Durch verschärfte Gesetzgebungen und erhöhte qualitative Anforderungen der Kunden wird der Einsatz von nicht-lebensmitteltauglichen Flakes für die Produktion von Teilen geeignet für den Lebensmitteleinsatz auch in einer Zwischenschicht (A-B-A) unmöglich gemacht oder erschwert. Es reicht also nicht mehr aus z.B.: bei Tiefziehteilen außen eine Schicht aus lebensmitteltauglicher Neuware, die als Barriere zur nicht lebensmitteltauglichen Schicht dient, einzusetzen, sondern es müssen entsprechende Migrationsanalysen durchgeführt werden, um dies auch in der Produktion zu gewährleisten.

Gleichzeitig gibt es viele existierende Produktionssysteme, insbesondere Flachfolienanlagen und Preformspritzgießanlagen, die nicht in der Lage sind, die notwendigen Reinigungsschritte für PCR Flakes durchzuführen. Es gibt allerdings Systeme, die dieser Situation Rechnung tragen können.

Weiters gebietet die wirtschaftliche Situation den Einsatz von PCR Flakes. Es ist aber nicht immer wirtschaftlich sinnvoll, die oben genannte Reinigungssysteme zu jedem einzelnen Extrusionssystem oder Spritzgießsystem zu stellen. Beispielsweise sind die Anlagen zu klein, die Flexibilität zu gering oder es ist kein ausreichendes Qualitätsmanagement möglich. Daher ergeben sich zwei weitere Möglichkeiten des Einsatzes:
Variante 1: Einsatz als zentrales Reinigungssystem für ein oder mehrere Extrusionssysteme, Spritzgußsysteme usw., um aus PCR Flakes lebensmitteltaugliche Flakes zu produzieren. Diese Flakes können in Silos zwischengepuffert werden oder direkt auf mehrere Anlagen gleichzeitig aufgeteilt werden.
Variante 2: Integration des Reinigungssystems in eine Waschanlage für PCR Flakes als zusätzliche Reinigungsstufe, um lebensmitteltaugliche PCR Flakes zu produzieren. Diese PCR Flakes können dann direkt in den Verkauf kommen.

Grundsätzlich sind die unten angeführten Verfahren für alle Polyestertypen einsetzbar wie z.B. PBT (poly butylene terephtalate), PTT (polytrimethylene terephtalate), PEN (polyethylene-2.6-naphtalate), für die entsprechenden modifizierten PET Sorten resp. Copolyester sowie auch für unterschiedliche liquid crystal aromatic polyesters. Neben diesen oben angeführten Materialien sind auch der Bereich der Polyamide (PA), Polycarbonate (PC) und Werkstoffe mit biogenem Ursprung wie Polymilchsäure (PLA) verarbeitbar.

Zur Zeit haben aber neben den PET Verpackungen nur mehr PC Flaschen (Milchflaschen in USA und Australien) eine wirtschaftliche Bedeutung. Allerdings nimmt die Menge der PLA Verpackungen stetig zu und es ist absehbar, dass in Zukunft nennenswerte Kreislaufströme mit diesem Material auftreten werden. In diesem Fall können diese Materialien ebenfalls mit diesem Reinigungsverfahren verarbeitet werden. Grundsätzlich gilt, dass die Temperaturen und Verweilzeiten dem Polymer angepasst werden muss.

Ein zur Zeit weiterer existierender Materialstrom, der für den Einsatz für Verpackung von Lebensmitteln existiert, ist der Bereich der Polyolefine und Polystyrole, und da im Speziellen HD-PE , PP und PS. Aus diesen Materialien werden Hohlkörper oder Tiefziehteile erzeugt, in denen Lebensmittel wie Milch, Joghurt usw. abgepackt werden. Ein weiterer Einsatzfall sind Beutel aus LD-PE (zum Teil gefüllt mit Füllstoffen), in denen zum Beispiel Milch abgepackt wird. Diese Materialien unterliegen sehr häufig einer Kreislaufwirtschaft und Ziel ist es, diese Materialien wieder in den Lebensmitteleinsatz zu bringen. Auch hier gilt, wie schon wie oben beschrieben, dass die Gebinde gewaschen werden müssen und dann die allfälligen Migrationsstoffe entfernt werden müssen. Es kann das Reinigungssystem so wie oben beschrieben als zusätzliches Reinigungssystem in eine konventionelle Waschanlage integriert werden. PP, PS Tiefziehprodukte wie z.B. Joghurtbecher und HD-PE Flaschen (Milchflaschen in USA, GB, Australien) und mehr und mehr PP-Flaschen stellen zur Zeit die nennenswerten Stoffströme dar.

Grundsätzlich besteht die Möglichkeit zwei oder mehr Prozessbehälter in Serie oder zwei oder mehr Prozessbehälter in Parallelbetrieb anzuordnen.

Da keine direkte Kopplung zwischen Reinigungssystem und Extrusionssystemen besteht, sind zwei Verfahrensführungen möglich. Mit diesen Systemen kann ein kontinuierlicher Betrieb oder ein Batchbetrieb durchgeführt werden. Die vorliegende Beschreibung erfolgt exemplarisch an Hand von PET Flakes, sinngemäß gilt sie jedoch für alle anderen Materialien mit abgeänderten Temperaturen und Durchlauf bzw. Haltezeiten.

### Variante 1: Kontinuierlicher Betrieb

Bei einem kontinuierlichen Betrieb wird das PRC Flake mittels eines Schleusensystems (Schiebersystemen, Zellradschleusen usw.) in einen evakuierten oder mit Inertgas durchströmten Behälter gefüllt. Das Material wird durch eingebrachte mechanische Energie langsam erwärmt, getrocknet kristallisiert und entgiftet. Die eingebrachte Energie wird mittels der Drehzahl der Werkzeuge kontrolliert. Als Rückinformation dienen am Behälter angebrachte Temperatursensoren, die die erreichte Temperatur messen. Das Material wird aus dem Behälter kontinuierlich ausgeschleust, wobei eine Übergabestrecke vorgesehen ist, die bei Betrieb mit Vakuum sicherstellt, dass das Vakuum im Behälter erhalten bleibt. Die PCR Flakes wandern langsam von oben nach unten durch den Behälter und werden erwärmt und entgiftet. Wenn nötig, z.B. im Falle von Polyester, kann die Viskosität erhöht werden. Wird Inertgas eingesetzt, dann ist es wirtschaftlich sinnvoll, ebenfalls ein Schleusensystem einzusetzen um den Verlust von Inertgas so gering wie möglich zu halten. Es ist wirtschaftlich sinnvoll, das Gas im Kreislauf zu fahren und wieder für den Einsatz im Behälter aufzubereiten. Der Inertgasstrom kann, falls mehrere übereinander angeordnete Werkzeuge ausgebildet sind, als Querströmung in jeder Werkzeugebene eingebracht werden oder, wenn ein Energieausgleich von unten nach oben erwünscht wird, im Gegenstrom zum Materialstrom.

Durch die Temperierung der Werkzeuge, z.B. durch beheizte Mischwerkzeuge, kann die Temperatur des Materials zusätzlich beeinflusst werden, wobei die Temperierung der Werkzeuge, die auf unterschiedlichen Ebenen laufen können, mindestens auf einer Ebene, für jede Ebene separat erfolgen kann. Zu diesem Zwecke wird über die Antriebswelle ein Temperiermedium zugeführt. Es können die Werkzeugebenen in Serie durchflossen werden, wobei die unterste Ebene als erste angeströmt wird. Meist geht es darum, einen Temperaturausgleich zwischen den Ebenen zu schaffen und in den meisten Anwendungsfällen wird die unterste Werkzeugebene leicht gekühlt. Das erwärmte Medium wird zu den oberen Werkzeugebenen gebracht und übergibt eine Wärme an das dort kältere Material. In jeder Ebene werden die Werkzeuge parallel angeströmt, um in einer Ebene für gleiche Temperaturbedingungen zu sorgen. In jedem Fall benötigt man eine Durchführung durch die Welle nach außen und entsprechende Pumpen und Vorratstanks und gegebenenfalls eine Rückkühlung gegen Luft oder Wasser oder sonstige Medien.

Bei allen Beeinflussungsverfahren wird das Drehmoment des Antriebs bzw., noch wichtiger, die Temperaturverteilung des Materials, als Steuergröße für eine allfällige Regelung oder die manuelle Prozessführung herangezogen.

Der Reaktor wird unter Vakuum betrieben und das abzusaugende Volumen wird wesentlich durch die Materialmenge, die eingebrachte innere und äußere Feuchte und durch die zu reinigenden Giftstoffe bestimmt.

Grundsätzlich soll ein Vakuum mit einem Druck von weniger als 100 mbar, insbesondere weniger als 25 mbar, vorzugsweise weniger als 10 mbar, für eine Entgiftungsvorgang erreicht werden. Dabei ist eine Temperatur des Materials im unteren Bereich von mehr als 130°C, insbesondere mehr als 150°C, vorzugsweise mehr als 180°C, zu erzielen. Die mittlere Verweilzeit beträgt dabei mehr als 15 Minuten, insbesondere mehr als 30 min, insbesondere mehr als 40 min, vorzugsweise mehr als 60 min.

Soll zusätzlich eine Erhöhung der Viskosität erreicht werden, dann sind Drücke von weniger als 10 mbar, insbesondere weniger als 5 mbar, insbesondere weniger als 1-2 mbar und Temperaturen von mehr als 190°C, insbesondere mehr als 200°C, vorzugsweise mehr als 220°C, zu erreichen, wobei die mittlere Verweilzeit im Behälter mehr als 40 min, insbesondere mehr als 60 Minuten, insbesondere mehr als 80 Minuten, insbesondere mehr als 100 Minuten betragen soll.

Das Vakuumsaugvermögen bei Eingangsfeuchten der PCR Flakes < 1 % soll bei einem Druck von etwa 3 mbar zwischen 2 m³/kg bis 8m³/kg Material liegen.

Im Falle der Verwendung eines Inertgases werden durch eine Kreislaufführung des Gases die Kosten reduziert, durch eine Vortrocknung des Gases die Qualität (Viskosität) der produzierten Flakes erhöht und durch Erwärmung des Gases eine Abkühlung der Flakes vermieden. Die Einbringung der Energie zur Erwärmung der Flakes erfolgt nicht durch das Inertgas, wie dies in anderen Verfahren oft der Fall ist. Dadurch ist die Menge des Inertgases deutlich reduziert und dient nur zum Abtransport der freiwerdenden Feuchte resp. Giftstoffe. Die Menge wird allerdings wesentlich durch die eingebrachte Feuchtigkeit bestimmt. Der Bereich liegt ca. zwischen 0,002 m³/kg/h und 0,1 m³/kg/h. Der Taupunkt des Gases sollte in einem Bereich zwischen -10°C bis -60°C liegen, vorzugsweise unter -30°C.

### Variante 2: Batch Betrieb

Bei dieser Betriebsart wird eine definierte Menge der vorgewaschenen, getrockneten, üblicherweise < 1 % Restfeuchte enthaltenden, PCR Flakes in einen Behälter, wie oben beschrieben, mit umlaufenden Werkzeugen eingebracht. Unter Vakuum oder in einer Inertgasströmung wird das Material, insbesondere durch Einbringung mechanischer Energie, erwärmt, kristallisiert und für den Lebensmitteleinsatz gereinigt. Es besteht nun die Möglichkeit, die Verfahrensparameter nach unterschiedlichen Parametern des Eingangsmaterials, wie Eingangsfeuchte, der gewünschten Reinigung als auch den gewünschten Materialparametern des Ausgangsmaterials, wie die Erhöhung der Grenzviskosität der PCR Flakes, entsprechend anzupassen.

Es ist also möglich, sowohl die Verweilzeit, die Temperatur als auch das Vakuum bzw. die Inertgasströmung in weiten Bereichen anzupassen.

In jedem Fall werden allerdings folgende Prozessschritte zu durchfahren sein:
1) Einfüllen des Materials
2) Erwärmung, Trocknung und Kristallisierung des Materials
3) Haltezeit bzw. Entgiftungszeit bzw. Viskositätserhöhungszeit
4) Option: Abkühlen im Behälter
5) Austrag des Materials

### Bevorzugtes Beispiel eines Reinigungsprozesses:

Als Eingangsmaterial werden vorgewaschene PCR Flakes, mit einer Eingangsfeuchte von <0,7% bei einer Materialtemperatur von etwa 20°C verwendet. Die Materialmenge des Batches wird innerhalb von ca. t = 5 - 10 min unter Atmosphäre in den Reaktionsbehälter eingefüllt. Dann wird das Vakuum angelegt oder der vornehmlich trockene, unter Umständen erwärmte, Inertgasstrom durchgeleitet. Durch die Werkzeuge wird rasch Energie in das Material eingebracht. Dabei wird mit der Variation der Drehzahl der Werkzeuge als auch durch allfällige verstellbare Werkzeuge die Energieeinbringung kontrolliert. Bei diesem Erwärmprozess auf ca. 180°C wird das Material getrocknet und kristallisiert. Das Vakuum bzw. der Inertgasstrom fördern die freiwerdende Feuchte und die Giftstoffe ab. Wird eine Temperatur von mehr als 180°C erreicht, dann folgt eine Haltezeit, um die Lebensmitteltauglichkeit des Materials zu erzielen. Dabei wird die Temperatur des Materials auf T> 180°C gehalten. Dies wird vor allem durch Variation der Drehzahl erreichet.

Grundsätzlich kann bei diesem Prozess ein Abtausch von Prozessparametern erfolgen. Man kann z.B. durch Erhöhung der Verweilzeit bei einer gewissen Temperatur ein geringeres Vakuum zulassen oder mit einer höheren Verarbeitungstemperatur eine kürzere Verweilzeit zur Reinigung erreichen.

Im Falle einer Reinigung mit Vakuum, um ein PCR Flake für den Lebensmitteleinsatz zu erreichen werden vorteilhafterweise folgende Parameter einzuhalten sein:
- Druck in der Haltezeit: < 100 mbar, besser <50 mbar, besser < 10 mbar;
- Haltezeit: > 5 Minuten, besser >10 Minuten, besser 20 Minuten, besser 30 Minuten;
- Temperatur in der Haltezeit: > 130°C, besser > 150°C, besser > 180°C, besser > 190°C

Bei Inertgasspülung wird ein Austausch des Volumens des Behälters mindestens 2-3 mal in der Stunde, besser 4-5 mal in der Stunde, besser 10 mal in der Stunde zu erzielen sein. Die Temperaturen bzw. die Haltezeit bleiben im Wesentlichen gleich. Es wird nur das Vakuum durch Inertgas ersetzt bzw. kann ein reduzierter Inertgasdruck, im Vergleich zur Atmosphäre, aufrecht erhalten werden.

Wenn nun neben dem Reinigungsprozess eine Erhöhung der Grenzviskosität gewünscht wird, kann dies durch Erhöhung der Prozesstemperatur, durch Verlängerung der Prozesszeit bzw. durch Verringerung des Vakuums erreicht werden.

Es wird eine Temperatur von größer 180°C, besser >200°C, besser >220°C, zu erreichen sein. Das Vakuum sollte kleiner 50 mbar, besser kleiner 10 mbar, besser kleiner 1 mbar, besser kleiner 0,5 mbar, besser kleiner 0,1 mbar, sein. Die Haltezeit wird mindestens 40 min, besser 60 min, besser 90 min, besser 120 min, betragen, wobei die Zeit nach oben eher eine wirtschaftliche Grenze darstellt als eine technische.

Auch hier kann als Abführmedium von frei werdendem Wasser oder Ethylenglykol ein trockenes Inertgas (z.B. Taupunkt > - 40°C) verwendet werden.

### Weiteres Beispiel eines Einsatzfalles bei der Behandlung eines Materials erhöhter Feuchte:

Die PCR Flakes haben eine höhere äußere Feuchte z.B.: 2-3%. Die innere Feuchte beträgt ca. 2000 - 3000 ppm. Es wird im Erwärmungsprozess nur ein geringes Vakuum an den Behälter angeschlossen um die entstehende Wasserdampfmenge effizient aus dem Behälter zu transportieren. Weiters kann eine definierte Menge Luft oder Inertgas im Ausmaß von ca. 1-2m³/h besser 3-5m³/h besser 10m³/h so eingebracht werden, dass die Feuchte abgesaugt werden kann (Spülung). Anstelle des Vakuums kann auch in dieser Phase ein starkes Absauggebläse mit entsprechender Zuluft eingesetzt werden. Ziel ist es, die abdampfende äußere Feuchtemenge so schnell wie möglich aus dem Behälter zu bringen.

Erst wenn die Feuchte im Material stark reduziert ist, wird ein erhöhtes Vakuum angeschlossen, um die innere Feuchte der PCR Flakes zu minimieren. Die allfällige Zufuhr von Medien wird bis auf 0 m³/h reduziert. Erkennbar ist dies entweder an der Materialtemperatur im Behälter (sie wird in der Nähe von 100°C bleiben, solange nennenswerte äußere Feuchtemengen verdampfen) oder es kann die Feuchte auch im Abgasstrom gemessen werden und unter einem bestimmten Schwellwert das Vakuum erhöht werden. Damit wird sichergestellt, dass das Vakuumpumpensystem immer im effizientesten Saug- bzw. Leistungsbereich läuft. Man kann auch die Motorströme der Vakuumpumpen messen und an Hand dieser die Pumpen bzw. Vorpumpen in ihrer Drehzahl regulieren und das Saugvolumen entsprechend erhöhen, das bei abnehmender Feuchte mit einer Erhöhung des Vakuums im Reaktor einhergeht.

Natürlich wird solch ein Vorgang zu einer Verlängerung der Batchzeit führen. Allerdings hat man hier ein effektives Mittel in der Hand, der wechselnden Eingangsfeuchte des Materials entgegenzusteuern, insbesondere dann, wenn entsprechende Rückmeldungen über die Feuchte im Abgasstrom oder Ströme der Vakuumpumpen in den Steuer- bzw. Regelkreisen verarbeitet wird. Wird solch ein System in eine Waschanlage eingebaut, kann unter Umständen auf eine aufwendigere Endtrocknung verzichtet werden oder diese entsprechend minimiert werden.

Nach dem Erreichen der nötigen Temperatur bzw. des nötigen Vakuums startet die entsprechende Haltezeit, die für die Entgiftung bzw. für eine Viskositätserhöhung nötig ist. In der Haltezeit kann durch Abgasanalyse eine Detektion von Giftstoffen erfolgen und unterschiedliche Abläufe können eingeleitet werden. Entweder wird der Batch abgebrochen und das Material für den Einsatz im Nichtlebensmittelbereich herangezogen oder es wird die Batchzeit so lange verlängert bis keine Detektion mehr erfolgt.

### Begleitende Vorrichtungen bzw. Maßnahmen für das kontinuierliche Verfahren oder das Batch-Verfahren beide Verfahren:

Die PCR Flakes werden nach der Abreinigung bzw. Viskositätserhöhung nicht notwendigerweise unmittelbar der weiteren Verarbeitung zugeführt. Aus diesem Grund werden die Flakes in folgenden Einrichtungen wie Silos, Big Bags usw. zwischengelagert. Am Ende des Reinigungszyklus sind die Flakes heiß. Werden die Flakes nicht direkt einer Verarbeitung durch einen weiteren thermischen Prozess, bei dem die innere Energie der Flakes genützt werden kann, z.B. einer Extrusion, zugeführt, dann müssen die Flakes gekühlt werden, bevor sie zwischengelagert werden können. Die bei diesem Prozess abfallende Wärme wird dabei aus dem Kühlmedium abgeführt und würde ungenutzt verloren gehen.

**Aufgabe** der Erfindung ist es somit, ein Verfahren und eine Anordnung zu schaffen, mit dem/der die Polymermaterialien effizient und wirtschaftlich behandelt und insbesondere entgiftet werden können.

Diese Aufgabe wird für das Verfahren durch die kennzeichnenden Merkmale des Anspruchs 1 und für die Anordnung durch die Merkmale des Anspruchs 8 gelöst.

Das erfindungsgemäße Verfahren betrifft somit ein Verfahren zur Reinigung, Vorbehandlung bzw. Aufbereitung von Polymermaterialien, insbesondere von Kunststoffabfällen in Form von Flakes, wobei die zu behandelnden Polymermaterialien in zumindest einem Aufnahmebehälter, Schneidverdichter bzw. Reaktor, insbesondere unter Vakuum oder Inertgas, unter ständiger Mischung bzw. Bewegung und gegebenenfalls Zerkleinerung, bei ständiger Erhaltung der Rieselfähigkeit bzw. Stückigkeit, auf eine Temperatur unterhalb der Schmelztemperatur, vorzugsweise über der Glasübergangstemperatur, des Polymermaterials, erwärmt und dadurch gleichzeitig, insbesondere in einem Schritt, kristallisiert, getrocknet und/oder gereinigt bzw. entgiftet werden.

Das erfindungsgemäße Verfahren zeichnet sich dadurch aus, dass die heißen Polymermaterialien anschließend, insbesondere auf Raumtemperatur, abgekühlt werden, wobei die bei deren Abkühlung abgegebene bzw. freigesetzte thermische Energie an einer anderen, insbesondere früheren, Stelle wieder in den Prozess ein- bzw. rückgeführt wird. Auf diese Weise kann das Material effizient, energiesparend und wirtschaftlich behandelt werden.

### Weitere vorteilhafte Ausgestaltungen des Verfahrens finden sich in den abhängigen Ansprüchen:

Gemäß einer vorteilhaften Weiterentwicklung, ist es vorteilhaft, wenn die Polymermaterialien vor ihrer Behandlung im Reaktor einer vorangehenden Waschung, Trocknung und/oder Vorkristallisation unterzogen werden. Dies erhöht die Qualität des Endproduktes. Da auch diese Schritte Energie benötigen, kann die rückgeführte Energie auch für diese Schritte herangezogen werten. Es ist vorteilhaft, die gewonnene Energie aus dem Kühlmedium an einer anderen Stelle wieder einzusetzen, es z.B. zur Vorwärmung der PCR Flakes zu verwenden. Diese Energie kann nun je nach Einsatzfall unterschiedlich verwendet werden. Die rückgewonnene Energie beträgt zumindest 20% des Energieinhaltes der Flakes, besser 40%, besser 50-60%. Es kann daher die Wirtschaftlichkeit solch eines Systems deutlich erhöht werden.

In diesem Zusammenhang ist es vorteilhaft, wenn die bei der Abkühlung der Polymermaterialien abgegebene bzw. freigesetzte thermische Energie zur direkten oder indirekten bzw. unmittelbaren oder mittelbaren Erwärmung der, insbesondere noch unbehandelten, Polymermaterialien direkt im Reaktor oder vor Einbringung der Polymermaterialien in den Reaktor, vorzugsweise im Zuge der Waschung, der Trocknung und/oder der Kristallisation, verwendet wird.

Je nach Anforderung an die Endqualität folgen unterschiedliche Abkühlprozesse. Grundsätzlich ist PET empfindlich gegen dem Einfluss von Sauerstoff und Feuchte und dass umso mehr, je heißer das Polymer ist. Da die Flakes eine hohe Oberfläche im Verhältnis zum Volumen besitzen, sind sie daher im heißen Zustand empfindlich gegenüber Vergilben durch Sauerstoff und/oder Viskositätsabbau durch Feuchte der Umgebungsluft. Daher ist diesem Zustand bei der Abkühlung und beim Weitertransport Rechnung zu tragen. Je heißer die Flakes sind und je höher die qualitativen Anforderungen sind, die an das Flake gestellt werden, umso mehr Aufwand muss man für diesen Prozessschritt betreiben.

Folgende Möglichkeiten werden je nach Einsatzfall bzw. je nach zu erreichender Endqualität ausgewählt:

### hohe Viskosität, hohe Farbtreue:

In diesem Fall wird der Abtransport bzw. die Kühlung mit trockenem Inertgas vorgenommen. Fällt die Temperatur der Flakes unter ca. 130°C, besser 110°C, besser 100°C, ist keine nennenswerte negative Beeinflussung des Materials mehr zu erwarten und es kann auf normale Luft als Kühl-, Lager- und Transportmittel umgestiegen werden. In jedem Fall wird man das Inertgas im Kreislauf führen und die gespeicherte Energie rückgewinnen.

### hohe Viskosität, unkritische Farbe:

In diesem Fall kann getrocknete Luft als Abkühlmedium genügen. Die Luft sollte mit einem Taupunkt von -10°C, besser -20°C, besser - 40°C, getrocknet werden.

Der Taupunkt als Maß für die Luftfeuchtigkeit ist eine abgeleitete, keine real vorliegende Temperatur und als solche normalerweise niedriger oder gleich der tatsächlichen Lufttemperatur. Sind beide gleich groß, so ist die Luft mit Wasserdampf gesättigt. Ein Maß für die Feuchtigkeit ist der Taupunkt deshalb, weil er vom Wasserdampfgehalt der Luft abhängig ist. Wird mit Wasserdampf gesättigte Luft unter den Taupunkt abgekühlt, so tritt Kondensation ein, welche sich in Beschlagen, Nebel, Tau bzw. allgemein in Niederschlag äußert. Je größer die Differenz zwischen Temperatur und Taupunkt ist, desto trockener ist die Luft.

### Reine Entgiftung (keine besondere Anforderungen an Farbe und Viskosität):

In diesem Fall kann schon eine Abkühlung mit übertrockneter Luft oder normaler Luft ausreichen. Bei der Übertrocknung der Luft ist ein Taupunkt von ca. 10°C, besser 5°C, noch besser 0°C, zu erreichen.

Diese Abkühlung kann im Fall eines Batchprozesses auch im Reaktor erfolgen. Dieser Vorgang wird meistens nicht wirtschaftlich sein, da eine teure Gerätschaft durch Prozesse blockiert wird, die durch günstigere Einrichtungen ebenfalls durchgeführt werden können.

Wirtschaftlicher kann es sein, einen nachgeschalten Behälter, dessen Mischwerkzeuge und/oder dessen Mantel stark gekühlt werden, und der unter Vakuum steht, zur Abkühlung zu verwenden. Es ist damit sichergestellt, dass eine oxidative Schädigung oder eine Schädigung durch Feuchte minimiert wird. Das Material muss im Falle eines kontinuierlichen Prozesses über ein Schleusensystem beschickt werden. Im Fall eines Batchprozesses kann auf diese Beschickungsart verzichtet werden. Es wird am Ende de Batchprozesses mit Hilfe einer entsprechend dimensionierten Austragsschnecke das gesamte Material unter Vakuum in den separaten Kühlbehälter transportiert. Dann wird der Kühlbehälter geschlossen und vom Behandlungsbehälter getrennt (Vakuum).

Anstelle des Vakuums kann der Behälter auch mit Inertgas gefüllt werden. Dieses Gas ist idealerweise getrocknet und kann z.B.: N₂ sein. In diesem Fall wird die Wärmeübertragung im Vergleich zu Vakuum durch das Medium verbessert.

Der Kühlbehälter hat vorteilhafterweise ein sehr langsam umlaufendes Rührwerk, das gekühlt ausgeführt werden kann. Die Wände sind gegebenenfalls ebenfalls gekühlt und es wird die Energie der Flakes unter leichtem Rühren an die gekühlten Teile abgegeben. Als Kühlung können gasförmige oder flüssige Medien eingesetzt werden.

Erfolgt die Abkühlung der Polymermaterialien unter Vakuum, ist es vorteilhaft, wenn die Abkühlung durch direkten Kontakt der Polymermaterialien mit einer Wand des Reaktors, des Kühlbehälters und/oder einer Misch- und Rühreinrichtung erfolgt.

Das erfindungsgemäße Verfahren kann, wie einleitend beschrieben, kontinuierlich oder diskontinuierlich bzw. als Batchprozess geführt wird.

Die erfindungsgemäße Anordnung zur Reinigung, Vorbehandlung bzw. Aufbereitung von Polymermaterialien, insbesondere von Kunststoffabfällen in Form von Flakes bzw. zur Durchführung des erfindungsgemäßen Verfahrens umfasst zumindest einen, zur Anlage eines Vakuums und/oder zur Versetzung bzw. Spülung mit Inertgas geeigneten, aus dem Stand der Technik an sich bekannten Aufnahmebehälter, Schneidverdichter bzw. Reaktor mit einer an sich bekannten Misch- und Rühreinrichtung und gegebenenfalls einer Zerkleinerungseinrichtung für die Polymermaterialien. Die Misch- und Rühreinrichtung bewegt das Material bzw. versetzt dieses in Rotation, mischt, erwärmt bzw. zerkleinert gegebenenfalls und erhält die Rieselfähigkeit bzw. Stückigkeit des Materials.

Weiters umfasst die Anordnung gegebenenfalls zumindest eine dem Reaktor vorgeschaltete Wascheinrichtung, Trocknungseinrichtung, Vorkristallisationseinrichtung und/oder Lagereinrichtung für die Polymermaterialien, Mittel zur Erwärmung der Polymermaterialien im Reaktor, insbesondere auf eine Temperatur unterhalb der Schmelztemperatur, vorzugsweise über der Glasübergangstemperatur, des Polymermaterials, Mittel bzw. zumindest eine Einrichtung zur Abkühlung der heißen Polymermaterialien, sowie Mittel zur Aufnahme und Überführung der bei deren Abkühlung abgegebenen bzw. freigesetzten thermischen Energie an eine andere, insbesondere vorgeordnete, Stelle der Anordnung oder an eine mit dieser in Wirkverbindung stehende Einrichtung, zur direkten oder indirekten bzw. unmittelbaren oder mittelbaren Erwärmung der Polymermaterialien, insbesondere in der Wascheinrichtung, der Trocknungseinrichtung, der Vorkristallisationseinrichtung, der Lagereinrichtung und/oder im Reaktor selbst. Mit einer derartigen Anordnung kann das Verfahren effizient und energiesparend geführt werden.

Es ist vorteilhaft, wenn die Mittel bzw. die Einrichtung zur Abkühlung der heißen Polymermaterialien dem Reaktor nachgeschaltet sind, und dass dafür vorzugsweise ein, dem Reaktor nachgeschalteter, separater, vorzugsweise evakuierbarer, Kühlbehälter vorgesehen ist, der insbesondere über eine nicht komprimierende Austragsschnecke an den Reaktor angeschlossen ist.

Der Reaktor kann vorteilhafterweise als Reinigungssystem in einer Waschanlage eingesetzt werden. Beim Einsatz in einer Waschanlage wird das zusätzliche Reinigungsgerät nach der Flakestrocknung zum Einsatz kommen. Nach einer erfolgten Kaltwaschung oder/und Heißwaschung oder/und Waschung mit entsprechenden aktiven Wasch- bzw. Reinigungssubstanzen werden die PCR Flakes einer mechanischen und/oder thermischen Trocknung zugeführt. Die aus der Abkühlung gewonnene Energie kann nun zur Erhitzung des Wassers für die Heißwaschung verwendet werden, oder zur Erzeugung der erwärmten Luft für eine thermische Trocknung der PCR Flakes oder, wie im Folgenden, wird die Energie zur Aufwärmung der Flakes benützt.

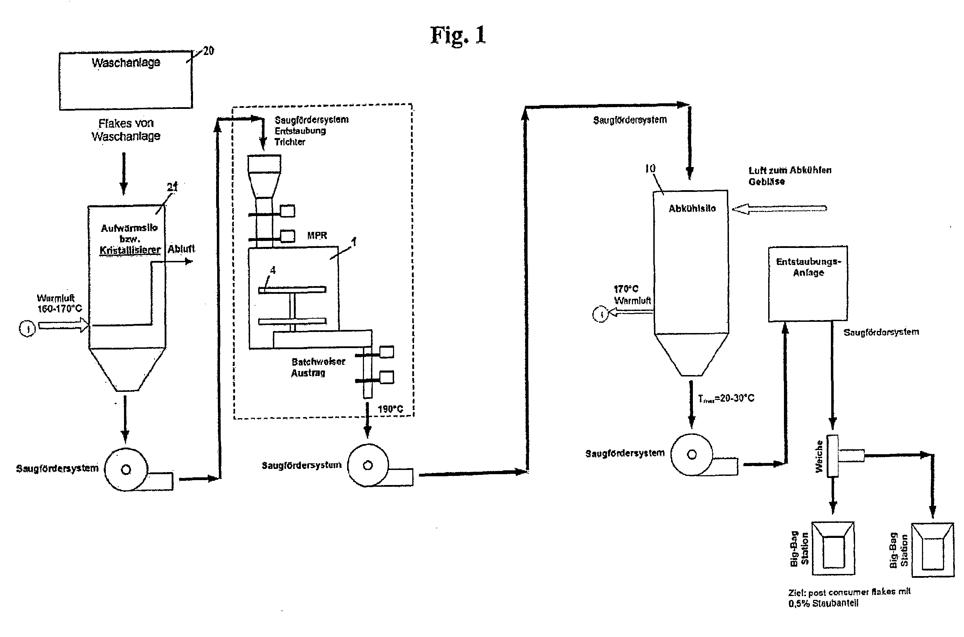

In Fig. 1 ist ein derartiges System bzw. eine Anordnung dargestellt, bei der ein Reaktor 1 bzw. ein Multi Purpose Reactor in eine Gesamtanlage integriert ist und die thermische Energie in vorteilhafter Weise recycliert wird. Gemäß dem Blockschaltbild der Fig. 1 umfasst die Gesamtanordnung eine Waschanlage, in der die Flakes einer Grundreinigung unterzogen werden. Derartige Waschanlagen sind aus dem Stand der Technik bekannt. Anschließend gelangen die Flakes aus der Waschanlage mit einer Feuchte von etwa 3.000 bis 10.000 ppm in den Kristallisator bzw. in den Aufwärmsilo. Dort werden sie einer Trocknung und gegebenenfalls einer Vorkristallisation bei erhöhter Temperatur unterzogen. Die Erhöhung der Temperatur erfolgt beispielsweise durch Warmluft mit einer Temperatur von 160 bis 170°C. Die Polymermaterialien verbleiben in diesem Aufwärmsilo für eine Verweilzeit von etwa 1 bis 4 Stunden. Anschließend werden die Flakes über ein Saugfördersystem in den Reaktor bzw. Multi Purpose Reactor 1 eingebracht. Es handelt sich dabei um einen herkömmlichen Schneidverdichter, wie er aus dem Stand der Technik bekannt ist. Im Schneidverdichter 1 ist ein drehbar gelagertes Misch- und Rührwerkzeug 4 angeordnet, das die Polymermaterialien in mindestens zwei Ebenen durchmischt und stückig hält. Die Temperatur im Reaktor 1 wird auf etwa 190 bis 210°C eingestellt und gehalten. Die Polymermaterialien verbleiben in diesem Reaktor 1 für eine mittlere Verweilzeit von ca. 1 -2 Stunden. Die Behandlung erfolgt unter Vakuum. Wesentlich ist, dass die Flakes niemals ihre Rieselfähigkeit verlieren und dass das Material in dem Behälter 1 höchstens erweicht, jedoch niemals aufgeschmolzen wird. Durch die Anlegung eines Vakuums oder auch eines Inertgases kommt es zu der gewünschten Entfernung der Migrationsstoffe und zu der Entgiftung. Anschließend wird das Material batchweise in Chargen von etwa 15 bis 20 kg über Schleusensysteme aus dem Reaktor 1 ausgebracht. Dabei hat das Material eine Temperatur von etwa 190°C. Die Flakes gelangen anschließend in einen Abkühlsilo bzw. Kühlbehälter 10 und verbleiben dort für eine mittlere Verweilzeit von etwa 30 Minuten - 1 Stunde. Dabei kühlen sie auf etwa 20 bis 50°C ab. Diese Abkühlung erfolgt gemäß dem vorliegenden Ausführungsbeispiel durch kühle getrocknete Luft, die mittels eines Gebläses in den Abkühlsilo 10 eingeblasen wird und die Flakes durchsetzt. Gemäß einer bevorzugten Ausführungsform können auch langsam umlaufende Mischwerkzeuge 4' vorgesehen sein. Die nunmehr kühlen Flakes gelangen in eine Entstaubungsanlage und werden anschließend sortiert und abgepackt. Die die Flakes durchsetzende Luft hat die thermische Energie der Flakes übernommen und weist nunmehr eine Temperatur von etwa 170° auf. Diese Energie kann nunmehr erfindungsgemäß benutzt werden, um Wärme an denjenigen Stellen des Verfahrens oder der Anordnung einzubringen, wo diese benötigt wird. Zuvor ist es vorteilhaft, auch die Prozessluft zu entstauben.

Gemäß der vorliegenden Ausführungsform wird die Warmluft in den Aufwärmsilo 21 eingebracht und dient dort zur Vorwärmung der Flakes bevor diese in den Reaktor 1 eingebracht werden. Die Warmluft kann aber auch zur Erwärmung des Waschwassers in der Waschanlage eingesetzt werden oder zur Erwärmung des Reaktors 1.

Gemäß einer weiteren vorteilhaften Ausführungsförm, und zwar bei einem Einsatz als Standalone-Gerät, kann die Energie der Warmluft auch auf folgende Weise eingesetzt werden. In diesem Fall werden PCR Flakes angeliefert. Es kann die Energie also nur zur Aufwärmung der Flakes benutzt werden. Da die PCR Flakes vor der Abkühlung zumindest eine Temperatur von 150 - 160°C haben, kann die Energie direkt, d.h. ohne Wärmepume, Kompression usw., verwendet werden. Zu diesem Zwecke ist ein isolierter Behälter ausreichender Größe vor dem Behandlungsreaktor 1 angeordnet. Dort werden nun die Flakes mit Hilfe von warmer Luft, getrockneter warmer Luft und/oder warmen Inertgasen aufgewärmt. Es kann auch ein Behälter verwendet werden, dessen Mantel durch ein warmes Medium durchflossen bzw. durchblasen wird. Rührelemente, die ebenfalls beheizt sein können, rühren das Material, damit ein ausreichender Wärmeübergang erzielt werden kann. Um allfällig freiwerdende Feuchte gezielt abzuziehen (nennenswerte Verdunstung tritt schon ab ca. 60°C auf) kann der Behälter unter leichtem Vakuum stehen oder ein absaugendes Gebläse sorgt für einen leichten Unterdruck. Es kann zusätzlich noch Falschluft, vornehmlich warme und/oder trockene oder übertrocknete Luft, in kleinen Mengen (siehe oben) beigegeben werden.

Bei der Verarbeitung von PET in der Schmelze fällt Acetaldehyd als Abbauprodukt an. Dieser leichtflüchtige Stoff ist allerdings durch seine geschmacksverändernde Wirkung unerwünscht. Bei der Verarbeitung der PCR Flakes im oben genanten Verfahren wird der Acetaldehyd Gehalt auf deutlich unter 1 ppm reduziert. Je nach Verfahrensparameter wird sogar die Nachweisgrenze unterschritten, wenn der Eingangswert < 100 ppm liegt und Prozessparameter von T> 160°C, besser 180°C, und t>10 Minuten, besser 20 Minuten, und p< 10 mbar, besser < 5mbar, eingehalten werden.

## Patentansprüche

1. Verfahren zur Reinigung, Vorbehandlung *oder* Aufbereitung von Polymermaterialien, insbesondere von Kunststoffabfällen in Form von Flakes, wobei die zu behandelnden Polymermaterialien in zumindest einem Aufnahmebehälter, Schneidverdichter *oder* Reaktor (1), insbesondere unter Vakuum oder Inertgas, unter ständiger Mischung bzw. Bewegung und gegebenenfalls Zerkleinerung, bei ständiger Erhaltung der Rieselfähigkeit *und* Stückigkeit, auf eine Temperatur unterhalb der Schmelztemperatur, vorzugsweise über der Glasübergangstemperatur, des Polymermaterials, erwärmt und dadurch gleichzeitig, insbesondere in einem Schritt, kristallisiert, getrocknet und/oder gereinigt bzw. entgiftet werden, **dadurch gekennzeichnet, dass** die heißen Polymermaterialien anschließend, insbesondere auf Raumtemperatur, abgekühlt werden, wobei die bei deren Abkühlung abgegebene bzw. freigesetzte thermische Energie an einer früheren Stelle wieder *zur direkten oder indirekten Erwärmung der Polymermaterialien* in den Prozess rückgeführt wird.

2. Verfahren nach Anspruch 1, **dadurch gekennzeichnet, dass** die Polymermaterialien vor ihrer Behandlung im Reaktor (1) einer vorangehenden Waschung, Trocknung und/oder Vorkristallisation unterzogen werden.

3. Verfahren nach Anspruch 1 oder 2, **dadurch gekennzeichnet, dass** die bei der Abkühlung der Polymermaterialien abgegebene bzw. freigesetzte thermische Energie zur direkten oder indirekten bzw. unmittelbaren oder mittelbaren Erwärmung der, insbesondere noch unbehandelten, Polymermaterialien direkt im Reaktor (1) oder vor Einbringung der Polymermaterialien in den Reaktor (1), vorzugsweise im Zuge der Waschung, der Trocknung und/oder der Kristallisation, verwendet wird.

4. Verfahren nach einem der Ansprüche 1 bis 3, **dadurch gekennzeichnet, dass** die Abkühlung der Polymermaterialien direkt im Reaktor (1) und/oder in einem, dem Reaktor (1) nachgeschalteten, separaten Kühlbehälter (10), insbesondere unter langsamen Rühren, erfolgt.

5. Verfahren nach einem der Ansprüche 1 bis 4, **dadurch gekennzeichnet, dass** die Abkühlung der Polymermaterialien mit trockenem Inertgas, trockener Luft mit einem Taupunkt von unter -10°C, vorzugsweise -20°C, insbesondere -40°C, oder mit normaler Luft mit einem Taupunkt von unter 10°C, vorzugsweise 5°C, insbesondere 0°c, erfolgt

6. Verfahren nach einem der Ansprüche 1 bis 5, **dadurch gekennzeichnet, dass** die Abkühlung der Polymermaterialien, insbesondere unter Vakuum, durch direkten Kontakt der Polymermaterialien mit einer Wand des Reaktors (1), des Kühlbehälters (10) und/oder einer Misch- und Rühreinrichtung (4, 4') erfolgt.

7. Verfahren nach einem der Ansprüche 1 bis 6, **dadurch gekennzeichnet, dass** das Verfahren kontinuierlich oder diskontinuierlich bzw. als Batchprozess geführt wird.

8. Anordnung zur Reinigung, Vorbehandlung *oder* Aufbereitung von Polymermaterialien, insbesondere von Kunststoffabfällen in Form von Flakes, zur Durchführung des Verfahrens nach einem der Ansprüche 1 bis 7, umfassend
- zumindest einen, zur Anlage eines Vakuums und/oder zur Spülung mit Inertgas geeigneten, Aufnahmebehälter, Schneidverdichter *oder* Reaktor (1) mit einer Misch- und Rühreinrichtung (4) und gegebenenfalls einer Zerkleinerungseinrichtung für die Polymermaterialien,
- gegebenenfalls zumindest eine dem Reaktor (1) vorgeschaltete Wascheinrichtung (20), Trocknungseinrichtung (21), Vorkristallisationseinrichtung (21) und/oder Lagereinrichtung für die Polymermaterialien,
- Mittel zur Erwärmung der Polymermaterialien im Reaktor (1), insbesondere auf eine Temperatur unterhalb der Schmelztemperatur, vorzugsweise über der Glasübergangstemperatur, des Polymermaterials,
- Mittel *oder* zumindest eine Einrichtung zur Abkühlung *(10)* der heißen Polymermaterialien,
- sowie Mittel zur Aufnahme und Überführung der bei deren Abkühlung abgegebenen bzw, freigesetzten thermischen Energie an eine *den Mitteln oder der Einrichtung zur Abkühlung (10)* vorgeordnete Stelle der Anordnung oder an eine mit dieser in Wirkverbindung stehende Einrichtung, zur direkten oder indirekten bzw. unmittelbaren oder mittelbaren Erwärmung der Polymermaterialien, insbesondere in der Wascheinrichtung (20), der Trocknungseinrichtung (21), der Vorkristallisationseinrichtung (21), der Lagereinrichtung und/oder im Reaktor (1) selbst.

9. Anordnung nach Anspruch 8, **dadurch gekennzeichnet, dass** die Mittel *oder* die Einrichtung zur Abkühlung der heißen Polymermaterialien dem Reaktor (1) nachgeschaltet sind, und dass dafür vorzugsweise ein, dem Reaktor (1) nachgeschalteter, separater, vorzugsweise evakuierbarer, Kühlbehälter (10) vorgesehen ist, der insbesondere über eine nicht komprimierende Austragsschnecke an den Reaktor (1) abgeschlossen ist.

10. Anordnung nach Anspruch 9, **dadurch gekennzeichnet, dass** der Kühlbehälter (10) eine, vorzugsweise kühlbare, langsam bewegbare Misch- und Rühreinrichtung (4') aufweist.

## Claims

1. A method of purifying, pretreating or processing polymer materials, in particular plastic wastes in the form of flakes, the polymer materials to be treated being heated to a temperature below the melting temperature, preferably above the glass transition temperature, of the polymer material in at least one receiving container, cutting compressor or reactor (1), in particular under vacuum or inert gas, while permanently mixing or moving, optionally crushing, and permanently maintaining pourability and lumpiness, and thereby being at the same time, in particular in one step, crystallized, dried and/or purified and/or detoxified, **characterized in that** the hot polymer materials are subsequently cooled down, in particular to room temperature, while the thermal energy emitted and/or released during their cooling down is reintroduced into the process at a previous point to directly or indirectly heat the polymer materials.

2. The method according to Claim 1, **characterized in that** the polymer materials are subjected to preliminary washing, drying and/or pre-crystallization prior to treatment in the reactor (1).

3. The method according to Claim 1 or 2, **characterized in that** the thermal energy emitted and/or released during cooling down the polymer materials is used to directly or indirectly, i.e. immediately or mediately, heat the polymer materials, in particular the still untreated ones, directly in the reactor (1) or prior to introducing the polymer materials to reactor (1), preferably during washing, drying and/or crystallization.

4. The method according to any one of Claims 1 to 3, **characterized in that** cooling of the polymer materials is done directly in the reactor (1) and/or in a separate cooling container (10) downstream of the reactor (1), in particular while slowly stirring.

5. The method according to any one of Claims 1 to 4, **characterized in that** cooling the polymer materials with dry inert gas, dry air having a dew point below-10 °C, preferably -20 °C, in particular -40 C, or with normal air having a dew point below 10 °C, preferably 5 °C, in particular 0° C.

6. The method according to any one of Claims 1 to 5, **characterized in that** cooling the polymer materials, in particular under vacuum, is done by directly contacting the polymer materials with a wall of the reactor (1), the cooling container (10) and/or a mixing and stirring device (4, 4').

7. The method according to any one of Claims 1 to 6, **characterized in that** the method is conducted in a continuous or discontinuous manner or as a batch process.

8. An arrangement for purifying, pretreating or processing polymer materials, in particular plastic wastes in the form of flakes, for conducting the method according to any one of Claims 1 to 7, comprising:
- at least one receiving container, cutting compressor or reactor (1), which is suitable for creating a vacuum and/or for becoming flushed with inert gas, having a mixing and stirring device (4) and optionally a crushing device for the polymer materials,
- optionally at least one washing device (20), drying device (21), pre-crystallization device (21) and/or storage device for the polymer materials upstream of the reactor (1),
- means for heating the polymer materials in the reactor (1), in particular to a temperature below the melting temperature, preferably above the glass transition temperature, of the polymer material,
- means or at least one device (10) for cooling down the hot polymer materials,
- and means of receiving and transferring the thermal energy emitted and/or released during their cooling down to a position of the arrangement upstream of the cooling means or device (10) or to a device in a functional connection therewith, to directly or indirectly, i.e. immediately or mediately, heat the polymer materials, in particular in the washing device (20), the drying device (21), the pre-crystallization device (21), the storage device and/or in the reactor (1) itself.

9. The arrangement according to Claim 8, **characterized in that** the means or device for cooling the hot polymer materials are/is located downstream of the reactor (1), and that a separate, preferably evacuatable, cooling container (10) is preferably provided therefor, which is connected to the reactor (1), in particular via a non-compressing output extruder.

10. The arrangement according to Claim 9, **characterized in that** the cooling container (10) has a, preferably coolable, slowly movable mixing and stirring device (4').

## Revendications

1. Procédé pour la purification, le prétraitement ou le traitement des matériaux polymères, notamment des déchets plastiques en forme de flocons, les matériaux polymères à traiter étant constamment mélangés et circulés et, selon le cas, broyés et réchauffés à une température sous la température de fusion, de préférence au-dessus de la température de transition vitreuse, desdits matériaux polymères dans au moins un récipient, broyeur-compacteur ou réacteur (1), notamment sous vide ou sous un gaz inerte, en maintenant leur faculté d'écoulement libre et structure granuleuse, et en même temps, notamment en une seule étape, cristallisés, séchés et/ou purifiés et dépollués, **caractérisé en ce que** les matériaux polymères chauds sont ensuite refroidis, notamment à température ambiante, l'énergie thermique dégagée ou libérée au cours de leur refroidissement étant recyclée et utilisée pour une étape antérieure du procédé pour réchauffer les matériauxdirectement ou indirectement.

2. Procédé selon la revendication 1, **caractérisé en ce que** les matériaux polymères sont lavés, séchés et/ou précristallisés avant leur traitement dans le réacteur (1).

3. Procédé selon l'une des revendications 1 et 2, **caractérisé en ce que** l'énergie thermique dégagée ou libérée au cours du refroidissement des matériaux polymères est utilisée pour réchauffer directement ou indirectement les matériaux polymères, notamment non-traités, directement dans le réacteur (1) ou avant l'introduction des matériaux polymères dans le réacteur (1), de préférence au cours de leur lavage, séchage et/ou cristallisation.

4. Procédé selon l'une des revendications 1 à 3, **caractérisé en ce que** le refroidissement des matériaux polymères a lieu directement dans le réacteur (1) et/ou dans un récipient frigorifique (10) séparé en aval, notamment en étant lentement agités.

5. Procédé selon l'une des revendications 1 à 4, **caractérisé en ce que** les matériaux polymères sont refroidis en utilisant un gaz inerte sec, de l'air sec avec un point de condensation de moins de -10 °C, de préférence de moins de -20 °C, notamment de moins de -40 °C, ou avec de l'air normal avec un point de condensation de moins de 10 °C, de préférence de moins de 5 °C, notamment de moins de 0 ° C.

6. Procédé selon l'une des revendications 1 à 5, **caractérisé en ce que** les matériaux polymères sont refroidis notamment sous vide en contact directe avec une paroi du réacteur (1), du récipient frigorifique (10) et/ou avec mélangeur/agitateur (4, 4').

7. Procédé selon l'une des revendications 1 à 6, **caractérisé en ce qu'**il s'agit d'un procédé continu ou discontinu.

8. Assemblage pour purifier, prétraiter et traiter des matériaux polymères, notamment des déchets plastiques en forme de flocons, pour implémenter le procédé selon l'une des revendications 1 à 7, comprenant
- au moins un récipient, broyeur-compacteur ou réacteur (1), approprié pour faire le vide et /ou pour le balayage à gaz inerte, avec un mélangeur/agitateur (4) et, selon le cas, un dispositif de broyage pour les matériaux polymères,
- selon le cas au moins un dispositif de lavage (20), un dispositif de séchage (21), un dispositif de précristallisation (21) et/ou un récipient de stockage pour les matériaux polymères en amont du réacteur (1),
- des moyens pour réchauffer les matériaux polymères dans le réacteur (1), notamment à une température sous la température de fusion, de préférence au-dessus de la température de transition vitreuse, desdits matériaux polymères,
- des moyens ou au moins un dispositif pour refroidir (10) des matériaux polymères chauds,
- ainsi que des moyens pour accueillir et transporter l'énergie thermiquedégagée ou libérée au cours de leur refroidissement à une position de l'assemblage en amont des moyens ou du dispositif pour refroidir (10) ou à un dispositif relié de manière opérationnelle audit assemblage, pour réchauffer directement ou indirectement les matériaux polymères, notamment dans le dispositif de lavage (20), le dispositif de séchage (21), le dispositif de précristallisation (21), le récipient de stockage et/ou dans le réacteur (1) même.

9. Assemblage selon la revendication 8, **caractérisé en ce que** les moyens ou le dispositif pour refroidir les matériaux polymères chauds sont/est en aval du réacteur (1) et **en ce qu'**il y a, de préférence, un récipient frigorifique (10) séparé en aval du réacteur (1) qui peut de préférence être évacué et est relié au réacteur notamment à travers une vis de décharge non-comprimant.

10. Assemblage selon la revendication 9, **caractérisé en ce que** le récipient frigorifique (10) comprend un mélangeur/agitateur (4') lent qui peut de préférence être refroidi.
